# EUROPEAN PATENT APPLICATION

(11) **EP 4 376 357 A1**
(43) Date of publication of application: **29.05.2024**
(21) Application number: 23208624.9
(22) Date of filing: 08.11.2023
(51) Int. Cl.: H04L 9/40, H04L 67/02, G06F 21/31

(54) **WEB AUTHENTICATION FOR NATIVE APPLICATION**

(30) Priority: 16.11.2022 US 202218056001
(71) Applicant: Lemon Inc., Grand Cayman, KY1-1205 (KY)
(72) Inventor: PIVOVAROV, Eugene, Los Angeles, 90066 (US)
(74) Representative: Dentons UK and Middle East LLP

(57) **Abstract**

A web authentication system (100) includes a native application (130) to generate at least one safety parameter, a user agent (140) instructed to perform web authentication with safety controls, and a relying party (150) to generate an authentication result. The native application (130) is to deliver the at least one safety parameter to the user agent (140), obtain the authentication result from the relying party (150) via the user agent (140), and validate the authentication result with the relying party (150).

## Description

### FIELD

The embodiments described herein pertain generally to web authentication and safety validation for a native application with a platform authenticator.

### BACKGROUND

Web authentication specifications or protocols such as the FIDO2^{®} (a web authentication specification or protocol under the guidance of the FIDO^{®} (Fast IDentity Online) alliance) specification provides a public specification for user authentication. User authentication typically involves the storage of a secret key in special hardware referred to as an authenticator. There may be two types of authenticators: platform authenticator and roaming authenticator. A platform authenticator may be built into the user's client device and is part of the corresponding platform. A roaming authenticator, such as a security key, may be a device external to the user's client device.

### SUMMARY

In one example embodiment, a method for performing web authentication for a native application includes generating at least one safety parameter, delivering the at least one safety parameter to a user agent, performing web authentication with safety controls, obtaining an authentication result from the user agent, and validating the authentication result with a relying party.

In another example embodiment, a web authentication system includes a native application to generate at least one safety parameter, a user agent instructed to perform web authentication with safety controls, and a relying party to generate an authentication result. The native application is to further deliver the at least one safety parameter to the user agent, obtain the authentication result from the relying party via the user agent, and validate the authentication result with the relying party.

In yet another example embodiment, a non-transitory computer-readable medium is disclosed. The computer-readable medium has computer-executable instructions stored thereon that, upon execution, cause one or more processors to perform operations including generating at least one safety parameter, delivering the at least one safety parameter to a user agent, performing web authentication with safety controls, obtaining an authentication result from the user agent, and validating the authentication result with a relying party.

Features of embodiments disclosed herein may be used in settings where web authentication may be appropriate or required, including password authentication. Such settings may include finance, healthcare, education, communication, shopping, travel (e.g., travel software applications, etc.), gaming applications, social media, email provider, subscription service, etc.

Features in the embodiments described herein may make the web authentication specification or protocol such as the FIDO2^{®} web authentication specification available on native mobile applications, and may significantly enhance the security of a user's account. Features in the embodiments described herein may provide advantages such as easy to use, fast, and neither incurring additional service costs nor requiring the server-side storage of personal identifiable information data (e.g., phone numbers, email addresses, etc.). Features in the embodiments described herein may reduce the cost of requiring a roaming authenticator such as a security key, and may allow a user to authenticate with the web authentication on native applications (including native mobile applications) without binding them to a roaming authenticator so that the native applications may work with both types of authenticators, which may significantly improve the adoption of the web authentication.

### BRIEF DESCRIPTION OF THE DRAWINGS

The accompanying drawings illustrate various embodiments of systems, methods, and embodiments of various other aspects of the disclosure. Any person with ordinary skills in the art will appreciate that the illustrated element boundaries (e.g. boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another, and vice versa. Non-limiting and non-exhaustive descriptions are described with reference to the following drawings. The components in the figures are not necessarily to scale, emphasis instead being placed upon illustrating principles. In the detailed description that follows, embodiments are described as illustrations only since various changes and modifications may become apparent to those skilled in the art from the following detailed description.
FIG. 1 illustrates an example system in which performing web authentication for a native application may be implemented, arranged in accordance with at least some embodiments described herein.
FIG. 2 is a flow chart illustrating an example processing flow of performing web authentication and/or safety validation for a native application, in accordance with at least some embodiments described herein.
FIG. 3 illustrates an example control flow of performing web authentication and/or safety validation for a native application, in accordance with at least some embodiments described herein.
FIG. 4 illustrates an example system in which performing web authentication may be implemented, arranged in accordance with at least some embodiments described herein.
FIG. 5 is a schematic structural diagram of an example computer system applicable to implementing an electronic device, arranged in accordance with at least some embodiments described herein.

### DETAILED DESCRIPTION

In the following detailed description, particular embodiments of the present disclosure are described herein with reference to the accompanying drawings, which form a part of the description. In this description, as well as in the drawings, like-referenced numbers represent elements that may perform the same, similar, or equivalent functions, unless context dictates otherwise. Furthermore, unless otherwise noted, the description of each successive drawing may reference features from one or more of the previous drawings to provide clearer context and a more substantive explanation of the current example embodiment. Still, the example embodiments described in the detailed description, drawings, and claims are not intended to be limiting. Other embodiments may be utilized, and other changes may be made, without departing from the spirit or scope of the subject matter presented herein. It will be readily understood that the aspects of the present disclosure, as generally described herein and illustrated in the drawings, may be arranged, substituted, combined, separated, and designed in a wide variety of different configurations, all of which are explicitly contemplated herein.

It is to be understood that the disclosed embodiments are merely examples of the disclosure, which may be embodied in various forms. Well-known functions or constructions are not described in detail to avoid obscuring the present disclosure in unnecessary detail. Therefore, specific structural and functional details disclosed herein are not to be interpreted as limiting, but merely as a basis for the claims and as a representative basis for teaching one skilled in the art to variously employ the present disclosure in virtually any appropriately detailed structure.

Additionally, the present disclosure may be described herein in terms of functional block components and various processing steps. It should be appreciated that such functional blocks may be realized by any number of hardware and/or software components configured to perform the specified functions.

The scope of the disclosure should be determined by the appended claims and their legal equivalents, rather than by the examples given herein. For example, the steps recited in any method claims may be executed in any order and are not limited to the order presented in the claims. Moreover, no element is essential to the practice of the disclosure unless specifically described herein as "critical" or "essential".

As referenced herein, "native application" or "native app" or "native mobile application" or "native mobile app" may interchangeably refer to a software application that is built for a specific device (e.g., a mobile device, a laptop computer, a desktop computer, a server, etc.) and/or a specific platform (including operating system such as iOS^{®}, Android^{®}, Windows^{®} etc. and/or the hardware that the software application runs on) using the code libraries of the platform and accessing the available hardware and/or other features (e.g., the camera, the global positioning system, the accelerometer, the compass, the list of contacts, the notification system, etc.) of the platform. It is to be understood that since a native application is built for use on a particular device and the operating system for the device, the native application may have the ability to use device-specific hardware and software and may provide optimized performance.

As referenced herein, "web application" or "web-based application" may refer to a software application that is built to be generic (e.g., having a same set of code, etc.) across multiple systems or platforms. It is to be understood that a web application may be hosted on the web and/or on a server and accessed or run from or in a web browser on the device. It is also to be understood that the browser may interpret the codes (programed in JavaScript ^{™}, Hyper-Text Markup Language (HTML), Extensible Markup Language (XML), etc.) in a web application regardless of the platform the web browser runs in, making web applications universal across multiple platforms.

As referenced herein, "user agent" may refer to a software application that is programmed to act on behalf of a user and/or other software application, which retrieves, renders, and facilitates the user's interaction with the web content. It is to be understood that a user agent may be a special type of software agent. In an example embodiment, a user agent may be a web browser, an e-mail reader, etc. It is also to be understood that a user agent may be a client in a client-server system.

As referenced herein, "web view" or "web-view" may refer to an engine (e.g., a browser engine) contained within an application. It is to be understood that a web view may provide interface to allow a programmer to write the software application using web programming tools such as HTML, JavaScript ^{™}, Cascading Style Sheets (CSS), XML, etc. It is also to be understood that web view may allow web content on external sites to be displayed within the software application without switching a user to a web browser and a different interface. It is further to be understood that web view may allow embedding a view into the software application that renders web content.

As referenced herein, "authenticator" may refer to a feature utilized to confirm a user's identity and/or to perform a digital authentication. In an example embodiment, an authenticator may be a feature that is unique or distinctive to a user. In an example embodiment, an authenticator may be activated by for example, a personal identification number the user knows. In an example embodiment, an authenticator may be activated by a biometric feature of the user or the like. It is to be understood that a user may authenticate to a computer system or a software application by demonstrating that the user has possession and/or control of an authenticator.

As referenced herein, "platform authenticator" may refer to an authenticator that is built into a specific platform and/or device and is implemented on the platform and/or device. In an example embodiment, a platform authenticator, which may also be referred to an internal authenticator, may include e.g., a camera, a biometric reader such as a fingerprint scanner, a face scanner, etc. that is built into a device e.g., a smartphone or the like. It is to be understood that a platform authenticator is to authenticate a user via a specific device and/or platform, and is embedded into the platform and/or device and may not be decoupled e.g., without deconstructing or destroying the hardware.

As referenced herein, "roaming authenticator" may refer to an authenticator that is built cross-platform and implemented physically separate from the platform and/or device. It is to be understood that a roaming authenticator may connect to a platform and/or device via a transport protocol such as a universal serial bus, Bluetooth^{®}, near-field communication, or the like. It is also to be understood that a roaming authenticator may refer to a cross-platform or external authenticator, which is not tied to a specific platform but may be used to authenticate across multiple platforms and/or devices. In an example embodiment, a roaming authenticator may be a hardware security key.

As referenced herein, "web authentication" or "WebAuthn" may refer to a web standard published by the World Wide Web Consortium (W3C) to standardize an interface for authenticating a user to various applications and services using cryptography. In an example embodiment, web authentication may be a core component of the FIDO2^{®} set of specifications under the guidance of the FIDO^{®} alliance. It is to be understood that web authentication may also refer to an application programming interface (API) that implements the FIDO2^{®} standard and/or specifications and website login pages to be updated to add authentication on supported browsers and platforms. It is also to be understood that on a client side, support for web authentication may be implemented in a variety of ways, and the underlying cryptographic operations may be performed by an authenticator.

As referenced herein, "relying party" may refer to a service providing access to a secure software application and/or processing requests for access into online resources. It is to be understood that a relying party may be an entity that utilizes the web authentication API to register and authenticate a user. It is also to be understood that a relying party may include a relying party client and a relying party server (or service). The relying party client may include client-side script that invokes the web authentication API in the client. The relying party server may be a server-side component (e.g., an API) that executes the relying party operations and other application logic. In an example embodiment, the relying party server may simply refer to the relying party, and the relying party client may refer to an auxiliary web application. In an example embodiment, the relying party client may interact with the relying party server by, e.g., by calling endpoint(s) of the relying party server. The relying party client may run in a user agent.

As referenced herein, "nonce" may refer to an arbitrary number that may be used just once in a cryptographic communication. It is to be understood that a nonce is typically a random or pseudo-random number issued in an authentication protocol to ensure that previous communications cannot be reused in an attack such as a replay attack, a repeat attack, or a playback attack.

As referenced herein, "endpoint" may refer to an end of a communication channel. In an example embodiment, when an API interacts with another system, the touchpoints of this communication may be considered endpoints. In an example embodiment, for APIs, an endpoint may include a uniform resource locator (URL) of a server or service.

As referenced herein, "redirecting" or "redirection" or "redirect" may interchangeably refer to the passing of control from one software component to another. For example, a redirect uniform resource identifier (URI) may be a location (e.g., a callback entry point of a software component) to which an authorization server (e.g., a replying party) sends the user once the application has been successfully authorized and has granted an authorization code or access token. In an example embodiment, a redirection URI may enable redirect control back to the native application during the web authentication process.

As referenced herein, "credential" or "authentication credential" may refer to a digital document that associates a user's identity to a form of proof of authenticity, such as a certificate, a personal identification number, a biometric feature, etc.

It is to be understood that web authentication specification may not cover a native application, including a native mobile application, and it may not be feasible to execute web authentication in a native application via web view because web view may not support the web authentication specification, especially with a platform authenticator. Features of the embodiments disclosed herein may allow a native application to use a platform authenticator without relying on a software development kit (SDK).

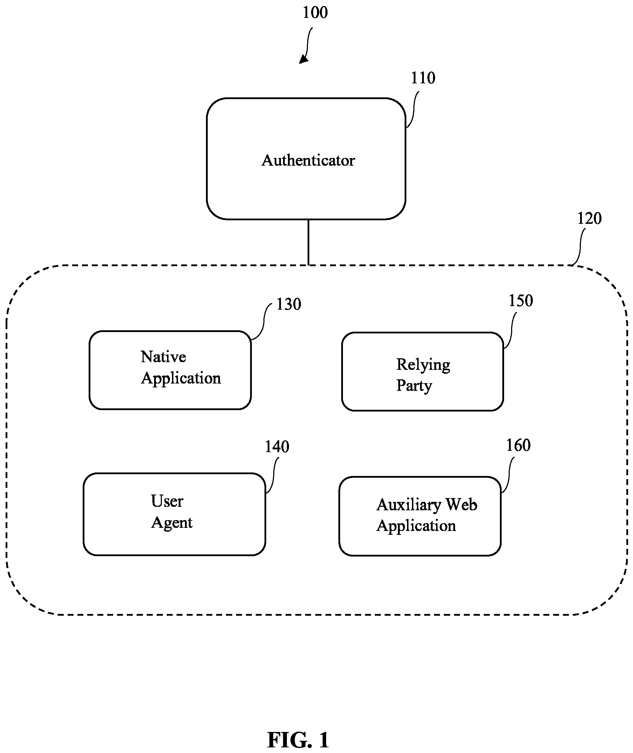

FIG. 1 illustrates an example system 100 in which performing web authentication for a native application may be implemented, arranged in accordance with at least some embodiments described herein.

In an example embodiment, the system 100 may be a web authentication system that implements web authentication according to a standard (e.g., FIDO2^{®} web authentication standard, etc.). The system 100 includes an authenticator 110 and a validator 120. In an example embodiment, the authenticator 110 may be a platform authenticator. In another example embodiment, the authenticator 110 may be a roaming authenticator.

The validator 120 includes a native application 130, a user agent 140, and a relying party 150. In an example embodiment, the native application 130 may be a native mobile application. The user agent 140 may be a browser including but not limited to a web browser. In an example embodiment, the relying party 150 includes a relying party server (a software application or a hardware) and a relying party client (a software application or a hardware). In another example embodiment, the relying party 150 is the relying party server, and an auxiliary web application 160 is the relying party client.

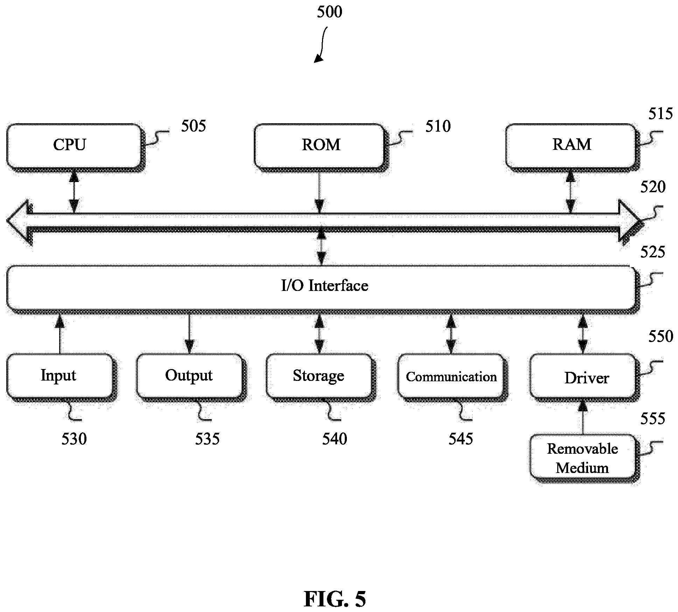

In an example embodiment, the authenticator 110 and/or the validator 120 may be hosted, stored, executed, implemented in and/or communicating with one or more electronic devices (e.g., 500 of FIG. 5, etc.) including but not limited to a mobile device such as a smartphone, a tablet computer, a laptop computer, a desktop computer, a server, and/or any other suitable electronic device.

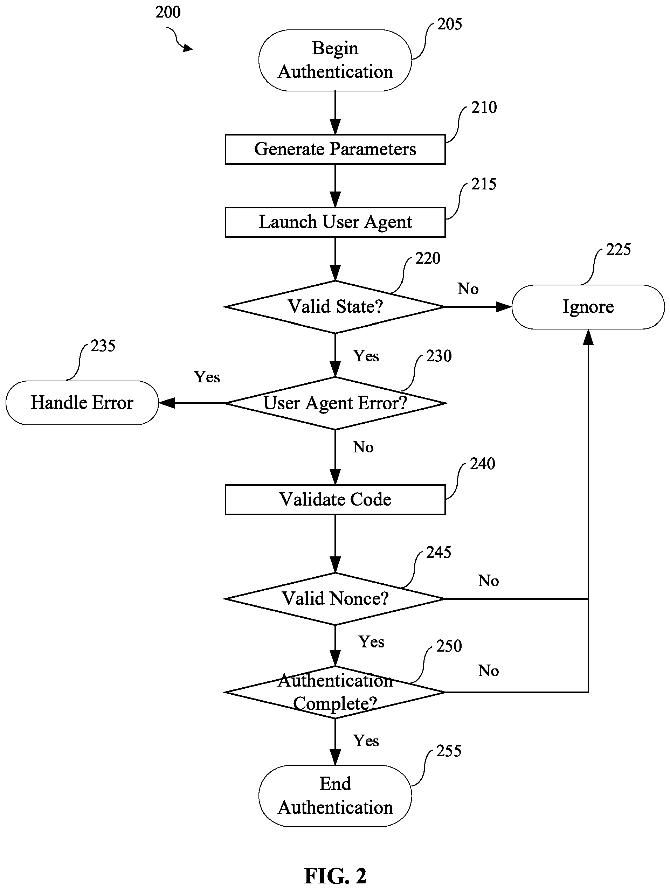

It is to be understood that the detailed descriptions of the components of the system 100 is to be described in view of the descriptions of FIGS. 2-4. It is also to be understood that although the system 100 is illustrated as discrete components, various components may be divided into additional components, combined into fewer components, or eliminated altogether while being contemplated within the scope of the disclosed subject matter. It will be understood by those skilled in the art that each function and/or operation of the components may be implemented, individually and/or collectively, by a wide range of hardware, software, firmware, or any combination thereof.

FIG. 2 is a flow chart illustrating an example processing flow 200 of performing web authentication and/or safety validation for a native application (e.g., the native application 130 of FIG. 1), in accordance with at least some embodiments described herein.

It is to be understood that the processing flow 200 disclosed herein may be conducted by one or more processors (e.g., the central processor unit 505 of FIG. 5, or any other suitable processor) or one or more components (e.g., the native application 130, etc.) of FIG. 1, unless otherwise specified. The conducting processor may communicate with other components of the system 100 of FIG. 1.

It is also to be understood that the processing flow 200 may include one or more operations, actions, or functions as illustrated by one or more of blocks 205, 210, 215, 220, 225, 230, 235, 240, 245, 250, and 255. These various operations, functions, or actions may, for example, correspond to software, program code, or program instructions executable by a processor that causes the functions to be performed. Although illustrated as discrete blocks, obvious modifications may be made, e.g., two or more of the blocks may be re-ordered; further blocks may be added; and various blocks may be divided into additional blocks, combined into fewer blocks, or eliminated, depending on the desired implementation. Processing flow 200 may begin at block 205.

At block 205 (Begin Authentication), the processor may start or begin the web authentication and safety validation process. In an example embodiment, the processor may initialize the system parameters and/or the application parameters for the process. Processing may proceed from block 205 to block 210.

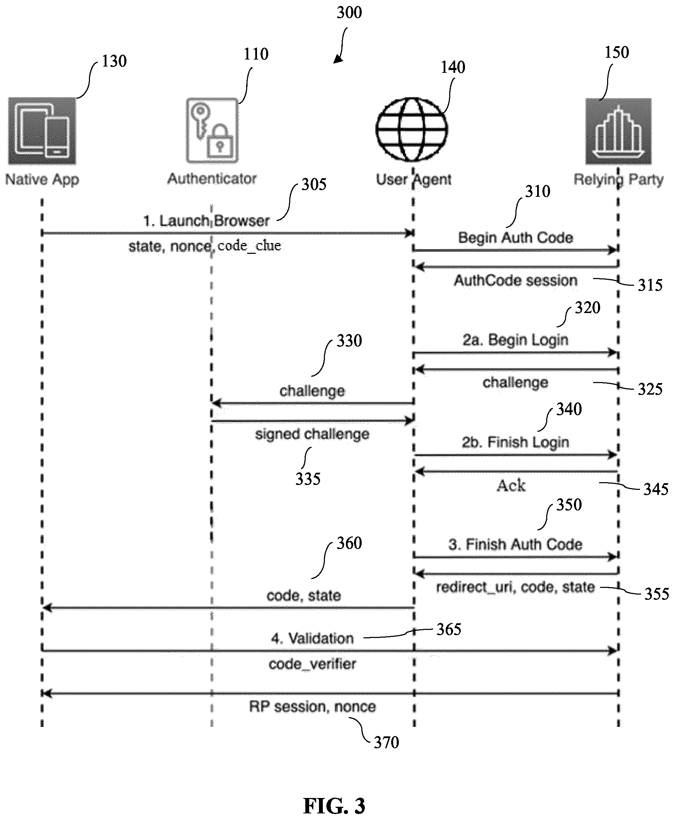

At block 210 (Generate Parameters), the processor and/or the native application may generate a plurality of safety parameters. In an example embodiment, the plurality of safety parameters include a first safety parameter (a code parameter such as a code clue), a second safety parameter (e.g., a state parameter or the like), a third safety parameter (e.g., a nonce parameter or the like), and a fourth safety parameter (e.g., a verifier such as a code verifier or the like, see description of FIG. 3). It is to be understood that the safety parameters may be random (non-guessable) values (e.g., numeric values, etc.), and that validating the safety parameters may help to prevent and/or eliminate security vulnerabilities in the authentication process. In an example embodiment, the state parameter may be a non-guessable value that is utilized to mitigate a cross-site request forgery (CSRF) attack, and the nonce parameter may be a non-guessable value that is utilized to mitigate a replay attack.. Processing may proceed from block 210 to block 215.

At block 215 (Launch User Agent), the processor and/or the native application may invoke, launch, start, open, run and/or execute a user agent (e.g., a web browser, see the user agent 140 of FIG. 1). The processor and/or the native application may deliver or send or pass first safety parameter (e.g., a code clue or the like), the second safety parameter (e.g., a state parameter or the like), and/or the third safety parameter (e.g., a nonce parameter or the like) to the user agent. In an example embodiment, the user agent may be a standalone user agent that is external to the native application. In another example embodiment, the user agent may be run by the native application by employing an "in-application browser" or "browser tab" design for better user experience, by which the user does not need to switch to a standalone or external browser application (when using the native application) and appears to stay with the native application.

The user agent may be instructed by the processor and/or the native application 130, e.g., to start or run an auxiliary web application (e.g., the auxiliary web application 160 of FIG. 1), e.g., to load, use, open, or display a web page at a web address containing the auxiliary web application, for a user to perform web authentication. In an example embodiment, the auxiliary web application may run static code (e.g., JavaScript ^{™} or the like) and/or may be hosted e.g., by a content delivery network, etc. In another example embodiment, the auxiliary web application may run an active page that may be hosted by the relying party server. It is to be understood that the auxiliary web application may or may not contain interactive user interface.

The auxiliary web application may launch e.g., a web authentication component (e.g., a component in compliance with FIDO2^{®} web authentication specification) that is built into the user agent, which may drive a user through an interactive authentication process (e.g., that is accessible or can be performed by the user agent). The interactive authentication process includes unlocking an authenticator (e.g., a platform authenticator, etc.) to verify a user's presence, by means of e.g., biometric verification or entering a personal identification number. When the web authentication process ends, the auxiliary web application may redirect from the user agent back to the native application, which may further obtain proof that the user has completed the web authentication process. See the description of FIG. 3 for details about the web authentication process. Processing may proceed from block 215 to block 220.

At decision block 220 (Validate State?), the processor and/or the native application 130 may validate the second safety parameter (e.g., the state parameter or the like). For example, after the user agent redirects back to the native application, the native application may check whether the returned value of the second safety parameter (i.e., a second safety parameter backup, which may be passed from a relying party (e.g., the relying party 150 of FIG. 1) via the user agent) matches the original value of the second safety parameter. It is to be understood that validating the second safety parameter including comparing the second safety parameter generated by the native application with the returned value of the second safety parameter (i.e., the second safety parameter backup, which may be the second safety parameter passed from the native application to the relying party via the user agent and then passed back from the relying party to the native application via the user agent, see description of FIG. 3). It is also to be understood that validating the second safety parameter may mitigate attacks such as a CSRF attack.

If the second safety parameter (e.g., the state parameter) is invalid (i.e., the second safety parameter does not match the second safety parameter backup), processing may proceed from decision block 220 to block 225. At block 225 (Ignore), the authentication and validation process may be unsuccessful and the process may end.

If the second safety parameter is valid (i.e., the second safety parameter match the second safety parameter backup), processing may proceed from decision block 220 to decision block 230.

At decision block 230 (User Agent Error?), the processor and/or the native application may check a status of the user agent. The processor and/or the native application 130 may obtain the status of the user agent, and check whether the user agent returns an error. For example, after the user agent redirects back (e.g., with a status of the user agent) to the native application, the native application may check whether the status of the user agent is indicative of a user agent error. In some example embodiments, the error may include "login failed", "bad parameters", "internal service error", etc.

If the status is indicative of a user agent error, processing may proceed from decision block 230 to block 235. At block 235 (Handle Error), the native application may handle the error and/or the authentication and validation process may end (e.g., the authentication and validation process may end and/or may be retried, etc.). When one or more of the error occurs, a user may have undesirable user experience. For example, it may appear that a login (e.g., to a social media account, etc.) is completed successfully, but in fact, no user session is established; the native mobile application may get stuck in a state that the user cannot get out of, such as a blank page; and/or the mobile application may crash.

If the status is not indicative of a user agent error, processing may proceed from decision block 230 to block 240.

At block 240 (Validate Code), the processor and/or the native application 130 may validate the authentication result (e.g., a code or the like) with the relying party 150. For example, after the user agent 140 redirects back to the native application 130, an authentication result (e.g., the code or the like; see also description of FIG. 3), which may be generated by and passed from the relying party 150 via the user agent to the native application 130, may be sent from the native application 130 to the relying party 150 for validation. In an example embodiment, the native application may call a validation endpoint of a relying party server (or service) to validate the value of authentication result. The relying party 150 may compare the authentication result received from the native application 130 and the authentication result generated by the relying party 150. If the comparison or validation is successful (i.e., the authentication result received from the native application 130 matches the authentication result generated by the relying party 150), it may prove to the relying party 150 that the user has completed authentication. The relying party 150 may return this proof to the native application 130 so that the native application 130 may have a copy of the proof. See e.g., the description of FIG. 3 for the detailed validation process of the authentication result. Processing may proceed from block 240 to decision block 245.

At decision block 245 (Validate Nonce?), the processor may validate the third safety parameter (e.g., the nonce parameter or the like). For example, when the native application calls the validation endpoint of a relying party server or service (see block 240), the native application may check whether the returned value of the third safety parameter (i.e., the third safety parameter backup passed from the relying party) matches the original value of the third safety parameter. It is to be understood that the third safety parameter backup may be the third safety parameter generated by the native application at block 210 and passed to the relying party via the user agent at block 210, and then passed back from the relying party directly to the native application in a response to the call to the validation endpoint.

It is to be understood that validating the third safety parameter includes comparing the third safety parameter generated by the native application with the returned value of the third safety parameter (i.e., the third safety parameter backup, which may be passed from the relying party when the native application calls the validation endpoint of the relying party service (see decision block 240)). It is also to be understood that validating the third safety parameter may mitigate attacks such as a replay attack. It is further to be understood that safety controls include validating or validation of one or more of the first, the second, and/or the third safety parameters and/or other parameter(s). That is, performing web authentication with safety controls indicates performing web authentication enhanced with (and/or supporting) the safety controls.

If the third safety parameter (e.g., the nonce parameter) is invalid (i.e., the third safety parameter does not match the third safety parameter backup), processing may proceed from decision block 245 to block 225. At block 225 (Ignore), the authentication and validation process may be unsuccessful and the process may end.

If the third safety parameter is valid (i.e., the third safety parameter match the third safety parameter backup), processing may proceed from decision block 245 to decision block 250.

At decision block 250 (Authentication Complete?), the processor may check whether a response from the relying party (e.g., when the native application calls the validation endpoint of the relying party service, see decision block 240) contains proof of completed authentication such as a session cookie, a token, or the like. It is to be understood that the proof of authentication may be from the relying party or be an outcome of a local validation.

If the response is not indicative of authentication completion (e.g., the response does not contain proof of completed authentication such as a session cookie, a token, or the like), processing may proceed from block 250 to block 225. At block 225 (Ignore), the authentication and validation process may be unsuccessful and the process may end.

If the response is indicative of authentication completion (e.g., the response contains proof of completed authentication such as a session cookie, a token, or the like), processing may proceed from decision block 250 to block 255. At block 255 (End Authentication), the authentication and validation process is successful and the process ends.

FIG. 3 illustrates an example control flow 300 of performing web authentication and/or safety validation for a native application (e.g., the native application 130 of FIG. 1), in accordance with at least some embodiments described herein.

It is to be understood that the control flow 300 disclosed herein may be conducted by one or more processors (e.g., the central processor unit 505 of FIG. 5, or any other suitable processor) or one or more components (e.g., the native application 130, the user agent 140, the relying party 150, the auxiliary web application 160, and/or the authenticator 110) of FIG. 1, unless otherwise specified. The conducting processor may communicate with other components of the system 100 of FIG. 1.

It is also to be understood that the control flow 300 may include one or more operations, actions, or functions as illustrated by one or more of flows represented by flows/arrows 305, 310, 315, 320, 325, 330, 335, 340, 345, 350, 355, 360, 365, and 370. These various operations, functions, or actions may, for example, correspond to software, program code, or program instructions executable by a processor that causes the functions to be performed. Although illustrated as discrete flows, obvious modifications may be made, e.g., two or more of the flows may be re-ordered; further flows may be added; and various flows may be divided into additional flows, combined into fewer flows, or eliminated, depending on the desired implementation.

It is further to be understood that in FIG. 3, each arrow represents a flow (e.g., a part of a challenge-response pair that includes a request (or challenge or action) and a response to the request in a challenge-response authentication process). The direction of the arrow represents the direction of the flow (e.g., a control or a process is shifted from one party to another). Processing flow 300 may begin at flow 305.

At flow 305 (Launch Browser), the native application 130 may launch or open the user agent 140 (e.g. a web browser, etc.) to load or run a web page at the web address containing an auxiliary web application (the relying party client, e.g., the auxiliary web application 160 of FIG. 1). The auxiliary web application that is run in the user agent may interact with the relying party server (or service) 150. The native application 130 may also generate and pass the first safety parameter (e.g., the code parameter such as the code clue), the second safety parameter (e.g., the state parameter), and the third safety parameter (e.g., the nonce parameter) to the relying party 150 via the user agent 140. It is to be understood that the flow 305 (a request) may be paired with the flow 360 (a response). In an example embodiment, a request-response pair may use a same data channel for passing data in both directions. In another example embodiment, the request-response pair may use different data channels for passing data in the respective direction. Processing may proceed from flow 305 to flow 310.

At flow 310 (Begin Auth Code), the user agent (launched by the native application and receiving the parameters from the native application) may start or activate the authentication process (e.g., performing web authentication) by e.g., calling a begin authorization code endpoint on the relying party service or server. Processing may proceed from flow 310 to flow 315.

At flow 315 (AuthCode Session), the relying party may create a new session (e.g., an authentication code session), which may store the request parameters that are received from the native application via the user agent through the flow 305 and the flow 310. It is to be understood that the request parameters may include e.g., a user account identification, redirection URI that enables redirect back to the native application, the first safety parameter (e.g., the code clue), the second safety parameter (e.g., the state parameter), the third safety parameter (e.g., the nonce parameter), and/or a parameter indicative of a time period of validity of authentication, etc. In an example embodiment, the session may be stored in a cache. The relying party may verify that the redirection URI matches a desired redirection URI value. The endpoint (e.g., the begin authorization code endpoint) on the relying party may return the corresponding non-guessable session identifier of the session to the user agent. Processing may proceed from flow 315 to flow 320.

At flow 320 (Begin Login), the user agent may start or activate the login process (e.g., to a social medial account, etc.) and perform web authentication e.g., by calling a begin login endpoint of the relying party service or server as specified by the web authentication specification or protocol. Processing may proceed from flow 320 to flow 325.

At flow 325 (Challenge), the relying party may respond with or send a request including a challenge (e.g., a non-guessable value) and other input data to the authenticator (proceeding from the flow 325 to the flow 330 (Challenge)) via the user agent. The authenticator may reply with a digitally signed challenge (e.g., a proof that the user has successfully authenticated) and other output data back to the relying party service or server via the user agent (proceeding from the flow 330 to the flow 335 (Signed Challenge) and to the flow 340 (Finish Auth Code)). It is to be understood that flows 310-325 may be combined into a single request-response pair.

At flow 340, the user agent may finish the login process by e.g., calling a finish login endpoint of the relying party service or server as specified by the web authentication specification or protocol. It is to be understood that the activation of the login and the completion of the login process may be associated with the session (see flow 315), whose identification may be a part of the "Begin Login" request (see flow 320), of the "Finish Login" request (see flow 340), or of both. In an example embodiment, the "Begin Login" and "Finish Login" requests from the user agent to the relying party may contain a user account identification parameter, and the relying party may verify such parameter against the value stored in the session (see flow 315).

It is to be understood that when the "Begin Login" request from the user agent to the relying party contains the non-guessable identifier of the session, relying party may temporarily save the identifier (e.g., in a cache, etc.) so that it may be available for the subsequent "Finish Login" request. Processing may proceed from flow 340 to flow 345.

At flow 345 (Ack), after a successful authentication (e.g., proved by the returned signed challenge via flow 335 and flow 340), the relying party may update the session (see flow 315) accordingly (e.g., with the received data) and save the time of authentication in the session. If the parameter indicative of a time period of validity of authentication is defined (see flow 315), the session expiration time may be set according to the value of such parameter. Processing may proceed from flow 345 to flow 350.

At flow 350 (Finish Auth Code), the user agent may finish the authentication code process by, e.g., calling a finish authorization code endpoint on the relying party service or server. It is to be understood that if the session (see flow 315) has not expired and contains proof that the user has successfully authenticated along with a recent time of authentication, the relying party may generate an authentication result (e.g., a non-guessable authorization code or the like). It is also to be understood that the relying party may correspond the authentication result (e.g., the code) with the parameters stored in the session (see flow 315 and flow 345). In an example embodiment, the authentication result (e.g., the code) may have a same value as the identifier of the session; in such embodiment, the relying party may leverage the data already stored in the session and may not need to make a copy. It is further to be understood that the authentication result (e.g., the code) may also be implemented as a self-contained digitally signed token storing the data required for the next step. Processing may proceed from flow 350 to flow 355.

At flow 355, the response (e.g., from the relying party, etc.) may serve to redirect the user agent back to the native application (from the flow 355 to the flow 360) and include the authentication result (e.g., the code) and the second safety parameter backup (which is the second safety parameter sent from 305 to the relying party via the user agent) being sent to the native application e.g., via the user agent. It is to be understood that flows 340-355 may be combined into a single request-response pair.

At flow 360, the native application may validate the second safety parameter backup based on the second safety parameter generated at flow 305. See e.g., descriptions of FIG. 2. Processing may proceed from flow 360 to flow 365.

It is to be understood that at the end of the pair (350, 355), the native application may detect that the user agent has redirected to a new URI hosted by an external web service, or the native application itself may listen to a call from the user agent at the specified URI.

At flow 365 (Validation), the native application may perform a safety validation process by, e.g., calling validation endpoint on the relying party service or server, which may validate the authentication result (e.g., the code) and a verifier with the relying party, and may verify that the authentication has not yet expired based on the expiration time. The relying party may delete the temporary data associated with authentication result (e.g., the code) and close the session (see flow 315) if the session is still open. Processing may proceed from flow 365 to flow 370.

At flow 370, the relying party may validate the authentication result from the native application (see block 240 of FIG. 2) and if the validation is successful, respond to the native application with proof of completed authentication such as user session cookie or an identity token and with the third safety parameter backup.

It is to be understood that in the control flow 300, each request and response may include additional parameters. For example, if the relying party supports multiple applications with different users, each application may have its own identifier and the identifier should be included in the calls to the web authentication APIs along with the user account identification.

It is also to be understood that in order for the user agent to redirect back to the native application, the native application may register a custom URI scheme. When the user agent opens a URI with this scheme, the operation system may open the native application and pass the URI as a launching parameter. A relying party may register multiple values of redirection URIs. It is further to be understood that a specific session may involve only one value of the redirection URI that needs to be previously registered. In another example embodiment, the native application may detect and intercept a redirection during the web page load, which may allow the auxiliary web application to redirect to a callback web page with a standard http/https schema.

It is further to be understood that in the request 365 and response 370, the native application may perform safety validation process to mitigate attacks (e.g., a malicious application controlling inter-application communication within the mobile device, the malicious application intercepting the authentication result (e.g., the code generated by the relying party), etc.). For example, the response (the flow 355) from the finish authorization code endpoint may contain a redirection to a redirection URI that includes an authentication result (e.g., the code generated by the relying party, etc.). The redirection URI may have a custom URI scheme. If a malicious application has registered itself as a handler for the custom scheme in addition to the legitimate native application, the malicious application may intercept the authentication result (e.g., the code generated by the relying party, etc.).

To mitigate such attack, the native application may generate a non-guessable verifier (e.g., a code verifier, etc.) and derive the first safety parameter (e.g., the code clue, see flow 305) from the verifier in a way that involves a cryptographically secure one-way function so that it will be unfeasible to compute the verifier from the first safety parameter (e.g., the code clue). The native application may keep the verifier secret until flow 365 (e.g., the call to a validation endpoint of the relying party service). In an example embodiment, the verifier may be a private key and the first safety parameter (e.g., the code clue) may be the corresponding public key generated by means of a public-key cryptography. In another example embodiment, the first safety parameter may be derived from a cryptographic hash of the verifier. It is to be understood that the implementation of the verifier and the deriving of the first safety parameter (e.g., the code clue) from the verifier may not be limiting.

In flow 365, the verifier and the authentication result (e.g., the code generated by the relying party and communicated to the native application, see flow 355 and 360) are sent by the native application to the relying party in the request (e.g., in the call to the validation endpoint). As long as the attacker (the malicious application) does not know the value of the verifier, even if the attacker intercepts the authentication result (e.g., the code generated by the relying party), there is no way for the attacker to use the intercepted authentication result in the call to the validation endpoint.

In the response (the flow 370) to the request (the flow 365), the relying party sends back to the native application with the identity proof (e.g., final result of authentication such as session cookie, identification token, etc.), the third safety parameter backup (which is the third safety parameter (e.g., the nonce parameter) that is saved in flow 315 by the relying party), the authentication time (e.g., the timestamp of the successfully completed web authentication), and the expiration time (e.g., the expiration time of the validity of authentication according to the parameter indicative of a time period of validity of authentication, see flow 315). It is to be understood that the authentication time and/or the expiration time may be optional in the response (the flow 370). In an example embodiment, the relying party may validate the authentication result sent from the native application at flow 365 based on the authentication result generated at flow 355. The relying party may also derive the first safety parameter (e.g., the code clue) from the verifier received from the native application. In an example embodiment, the relying party may validate the derived first safety parameter (i.e., the first safety parameter backup) based on the first safety parameter at flow 315.

The native application may validate the third safety parameter (e.g., the nonce parameter) result received from the relying party at flow 370 based on the third safety parameter generated at flow 305. See e.g., the descriptions of FIG. 2.

It is to be understood that in the control flow 300, in case of an unrecoverable error during any calls from the user agent to the relying party, the control flow may be redirected back to the native application for error handling. To mitigate the risk of an attack (e.g., a CSRF attack), the redirection URI may include the value of the second safety parameter (e.g., the state parameter, etc.). In some embodiments, the redirect may be implemented (1) in the error response from the relying party endpoint, (2) by adding an optional error code parameter to one of the relying party endpoints and by calling this endpoint with the error code so that it may respond with a desired redirection, (3) in the relying party client running in the user agent, and/or (4) as a combination of above-mentioned approaches. It is also to be understood that the native application may treat any error message as unauthentic unless the second safety parameter is validated (e.g., the state parameter matches its original value).

It is further to be understood that a user needs to register a credential (e.g., a web authentication credential) in order to make login with the web authentication possible. The registration process may be implemented as follows: at the beginning of the registration process, the user may have a session with the relying party service or server, which may be stored in the native application. Then the native application may launch the user agent (external standalone or in-application browser), which may establish its own user session with the relying party by employing token exchange or other mechanism(s). Then the user may register a new credential as specified by the web authentication protocol. Then the user agent may redirect back to the native application.

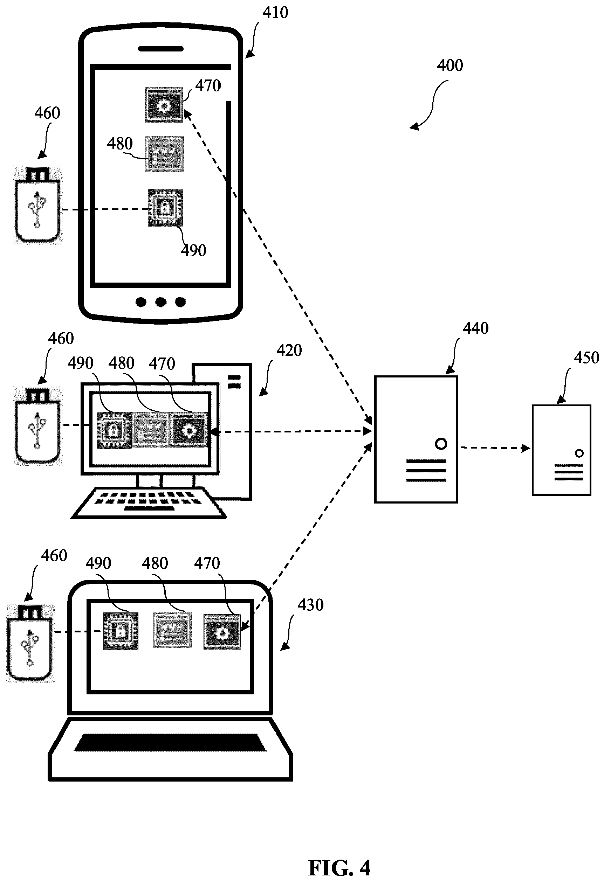

FIG. 4 illustrates an example system 400 in which performing web authentication may be implemented, arranged in accordance with at least some embodiments described herein.

In an example embodiment, the system 400 is a system in which a web authentication (e.g., a web authentication in compliance with the FIDO2^{®} specification) may be implemented. The system 400 includes one or more devices (410, 420, and/or 430). Each device may be e.g., a mobile device such as a smartphone, a tablet computer, a laptop computer, a desktop computer, a server, and/or any other suitable electronic device (see 500 of FIG. 5). The system 400 also includes a relying party server 440 and a server 450 (e.g., a FIDO^{®} server, etc.).

It is to be understood that FIG. 4 only shows illustrative numbers of the devices and the servers. The embodiments described herein are not limited to the number of the devices and/or the servers described. That is, the number of the devices and/or the servers described herein are provided for descriptive purposes only and are not intended to be limiting.

Each device may host, store, execute, and/or implement a relying party client 470 (e.g., an auxiliary web application), a user agent 480, a platform authenticator 490. In another embodiment, instead of the platform authenticator 490, there can be alternatively a roaming authenticator 460 (e.g., a security key, a mobile device, a wearable, etc.) that may connect to the device. See description of FIG. 1 for the description of the relying party client (the auxiliary web application), the user agent, the authenticator, and the relying party server.

It is to be understood that the server 450 may provide an application with a programming interface that organizations or individuals can leverage with a FIDO^{®} certified client in order to perform strong authentication that does not rely on shared secrets. The server 450 may be typically deployed by organizations within a secure network behind the relying party 440 that invokes the server 450 when a user authentication is required. It is also to be understood that the relying party server 440, the server 450, the relying party client 470, the user agent 480, and/or the platform authenticator 490 may be hosted, stored, executed, and/or implemented in one or more devices.

FIG. 5 is a schematic structural diagram of an example computer system 500 applicable to implementing an electronic device (for example, the device that hosts, implements, executes, and/or stores the system 100 and/or the validator 120 of FIG. 1, etc.), arranged in accordance with at least some embodiments described herein. It is to be understood that the computer system shown in FIG. 5 is provided for illustration only instead of limiting the functions and applications of the embodiments described herein.

As depicted, the computer system 500 may include a central processing unit (CPU) 505. The CPU 505 may perform various operations and processing based on programs stored in a read-only memory (ROM) 510 or programs loaded from a storage device 540 to a random-access memory (RAM) 515. The RAM 514 may also store various data and programs required for operations of the system 500. The CPU 505, the ROM 510, and the RAM 520 may be connected to each other via a bus 520. An input/output (I/O) interface 525 may also be connected to the bus 520.

The components connected to the I/O interface 525 may further include an input device 530 including a keyboard, a mouse, a digital pen, a drawing pad, or the like; an output device 535 including a display such as a liquid crystal display (LCD), a speaker, or the like; a storage device 540 including a hard disk or the like; and a communication device 545 including a network interface card such as a LAN card, a modem, or the like. The communication device 545 may perform communication processing via a network such as the Internet, a WAN, a LAN, a LIN, a cloud, etc. In an embodiment, a driver 550 may also be connected to the I/O interface 525. A removable medium 555 such as a magnetic disk, an optical disk, a magneto-optical disk, a semiconductor memory, or the like may be mounted on the driver 550 as desired, such that a computer program read from the removable medium 555 may be installed in the storage device 540.

It is to be understood that the processes described with reference to the flowchart of FIG. 2, the control flow of FIG. 3, and/or described in other figures may be implemented as computer software programs. The computer program product may include a computer program stored in a computer readable non-volatile medium. The computer program includes program codes for performing the method shown in the flowchart and/or process. In this embodiment, the computer program may be downloaded and installed from the network via the communication device 545, and/or may be installed from the removable medium 555. The computer program, when being executed by the central processing unit (CPU) 505, can implement the above functions specified in the method in the embodiments disclosed herein.

It is to be understood that the disclosed and other solutions, examples, embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., a field programmable gate array, an application specific integrated circuit, or the like.

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

It is to be understood that different features, variations and multiple different embodiments have been shown and described with various details. What has been described in this application at times in terms of specific embodiments is done for illustrative purposes only and without the intent to limit or suggest that what has been conceived is only one particular embodiment or specific embodiments. It is to be understood that this disclosure is not limited to any single specific embodiments or enumerated variations. Many modifications, variations and other embodiments will come to mind of those skilled in the art, and which are intended to be and are in fact covered by both this disclosure. It is indeed intended that the scope of this disclosure should be determined by a proper legal interpretation and construction of the disclosure, including equivalents, as understood by those of skill in the art relying upon the complete disclosure present at the time of filing.

### Aspects:

It is appreciated that any one of aspects can be combined with each other.

Aspect 1. A method for performing web authentication for a native application, the method comprising: generating a first safety parameter; delivering the first safety parameter to a user agent; performing web authentication with safety controls; obtaining an authentication result from the user agent; and validating the authentication result with a relying party.

Aspect 2. The method of aspect 1, wherein the performing of the web authentication includes obtaining a second safety parameter backup from the user agent, and the method further comprises: generating a second safety parameter; delivering the second safety parameter to the user agent; and validating the second safety parameter based on the second safety parameter backup.

Aspect 3. The method of aspect 1 or aspect 2, wherein the validating of the authentication result includes obtaining a third safety parameter backup from the relying party, the method further comprises: generating a third safety parameter; delivering the third safety parameter to the user agent; validating the third safety parameter based on the third safety parameter backup.

Aspect 4. The method of any one of aspects 1-3, further comprising: generating the verifier; deriving the first safety parameter from the verifier; and validating the first safety parameter based on an first safety parameter backup derived from the verifier, wherein the validating of the authentication result includes delivering a verifier to the relying party.

Aspect 5. The method of any one of aspects 1-4, wherein the performing of the web authentication includes obtaining a status from the user agent, the method further comprising: error handling when the status is indicative of a user agent error.

Aspect 6. The method of any one of aspects 1-5, further comprising: registering a web authentication credential.

Aspect 7. A web authentication system, the system comprising: a native application to generate a first safety parameter; a user agent instructed to perform web authentication with safety controls; and a relying party to generate an authentication result, wherein the native application is to further: deliver the first safety parameter to the user agent; obtain the authentication result from the relying party via the user agent; and validate the authentication result with the relying party.

Aspect 8. The system of aspect 7, wherein the native application is to further: generate a second safety parameter; deliver the second safety parameter to the user agent; obtain a second safety parameter backup from the user agent; and validate the second safety parameter based on the second safety parameter backup.

Aspect 9. The system of aspect 7 or aspect 8, wherein the native application is to further: generate a third safety parameter; deliver the third safety parameter to the user agent; obtain a third safety parameter backup from the relying party; and validate the third safety parameter based on the third safety parameter backup.

Aspect 10. The system of any one of aspects 7-9, wherein the native application is to further: generate a verifier; derive the first safety parameter from the verifier; and deliver the verifier to the relying party, wherein the relying party is to derive an first safety parameter backup from the verifier, wherein the native application is further to validate the first safety parameter with the relying party.

Aspect 11. The system of any one of aspects 7-10, wherein the native application is to further: obtain a status from the user agent; and handle error when the status is indicative of a user agent error.

Aspect 12. The system of any one of aspects 7-11, further comprising: an authenticator to authenticate a user when requested by the user agent.

Aspect 13. The system of aspect 12, wherein the authenticator is a platform authenticator.

Aspect 14. The system of aspect 12, wherein the authenticator is a roaming authenticator.

Aspect 15. A non-transitory computer-readable medium having computer-executable instructions stored thereon that, upon execution, cause one or more processors to perform operations comprising: generating a first safety parameter; delivering the first safety parameter to a user agent; performing web authentication with safety controls; obtaining an authentication result from the user agent; and validating the authentication result with a relying party.

Aspect 16. The computer-readable medium of aspect 15, wherein the operations further comprise: generating a second safety parameter; delivering the second safety parameter to the user agent; obtaining a second safety parameter backup from the user agent; and validating the second safety parameter based on the second safety parameter backup.

Aspect 17. The computer-readable medium of aspect 15 or aspect 16, wherein the operations further comprise: generating a third safety parameter; delivering the third safety parameter to the user agent; obtaining a third safety parameter backup from the relying party; and validating the third safety parameter based on the third safety parameter backup.

Aspect 18. The computer-readable medium of any one of aspects 15-17, wherein the operations further comprise: generating a verifier; deriving the first safety parameter from the verifier; delivering the verifier to the relying party; and validating the first safety parameter based on an first safety parameter backup derived from the verifier.

Aspect 19. The computer-readable medium of any one of aspects 15-18, wherein the operations further comprise: obtaining a status from the user agent; and error handling when the status is indicative of a user agent error.

Aspect 20. The computer-readable medium of any one of aspects 15-19, wherein the operations further comprise: registering a web authentication credential.

The terminology used in this specification is intended to describe particular embodiments and is not intended to be limiting. The terms "a," "an," and "the" include the plural forms as well, unless clearly indicated otherwise. The terms "comprises" and/or "comprising," when used in this specification, specify the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts without departing from the scope of the present disclosure. This specification and the embodiments described are exemplary only, with the true scope and spirit of the disclosure being indicated by the claims that follow.

## Claims

1. A method for performing web authentication for a native application (130), the method comprising:
generating a first safety parameter;
delivering the first safety parameter to a user agent (140);
performing web authentication with safety controls;
obtaining an authentication result from the user agent (140); and
validating the authentication result with a relying party (150).

2. The method of claim 1,
wherein the performing of the web authentication includes obtaining a second safety parameter backup from the user agent (140), and
the method further comprises:
generating a second safety parameter;
delivering the second safety parameter to the user agent (140); and
validating the second safety parameter based on the second safety parameter backup.

3. The method of claim 2,
wherein the validating of the authentication result includes obtaining a third safety parameter backup from the relying party (150),
the method further comprises:
generating a third safety parameter;
delivering the third safety parameter to the user agent (140);
validating the third safety parameter based on the third safety parameter backup.

4. The method of claim 3, further comprising:
generating the verifier;
deriving the first safety parameter from the verifier; and
validating the first safety parameter based on an first safety parameter backup derived from the verifier,
wherein the validating of the authentication result includes delivering a verifier to the relying party (150).

5. The method of claim 1,
wherein the performing of the web authentication includes obtaining a status from the user agent (140),
the method further comprising:
error handling when the status is indicative of a user agent error.

6. The method of claim 1, further comprising:
registering a web authentication credential.

7. A web authentication system (100), the system (100) comprising:
a native application (130) to generate a first safety parameter;
a user agent (140) instructed to perform web authentication with safety controls; and
a relying party (150) to generate an authentication result,
wherein the native application (130) is to further:
deliver the first safety parameter to the user agent(140) ;
obtain the authentication result from the relying party (150) via the user agent (140); and
validate the authentication result with the relying party (150).

8. The system (100) of claim 7, wherein the native application (130) is to further:
generate a second safety parameter;
deliver the second safety parameter to the user agent (140);
obtain a second safety parameter backup from the user agent (140); and
validate the second safety parameter based on the second safety parameter backup.

9. The system (100) of claim 8, wherein the native application (130) is to further:
generate a third safety parameter;
deliver the third safety parameter to the user agent (140);
obtain a third safety parameter backup from the relying party; and
validate the third safety parameter based on the third safety parameter backup.

10. The system (100) of claim 9, wherein the native application (130) is to further:
generate a verifier;
derive the first safety parameter from the verifier; and
deliver the verifier to the relying party,
wherein the relying party is to derive an first safety parameter backup from the verifier,
wherein the native application (130) is further to validate the first safety parameter with the relying party.

11. The system (100) of claim 7, wherein the native application (130) is to further:
obtain a status from the user agent (140); and
handle error when the status is indicative of a user agent error.

12. The system (100) of claim 7, further comprising:
an authenticator (110) to authenticate a user when requested by the user agent (140).

13. The system (100) of claim 12, wherein the authenticator (110) is a platform authenticator.

14. The system (100) of claim 12, wherein the authenticator (110) is a roaming authenticator.

15. A non-transitory computer-readable medium having computer-executable instructions stored thereon that, upon execution, cause one or more processors to perform the method of any one of claims 1-6.
